# EUROPEAN PATENT SPECIFICATION

(11) **EP 0 940 275 B1**
(45) Date of publication and mention of the grant of the patent: **21.11.2001**
(21) Application number: 99300041.3
(22) Date of filing: 05.01.1999
(51) Int. Cl.: B60H 1/00, B62D 25/14, B62D 25/08

(54) **Air conditioning unit**
Klimaanlage
Dispositif de climatisation

(30) Priority: 06.03.1998 JP 7330598
(43) Date of publication of application: 08.09.1999
(73) Proprietor: FUJI JUKOGYO KABUSHIKI KAISHA, Ota-shi, Gunma (JP); Zexel Valeo Climate Control Corporation, Saitama (JP)
(72) Inventor: Aiuchi, Yuji, Ota-shi, Gunma (JP); Sugita, Yasunori, Ota-shi, Gunma (JP); Nozawa, Kazuo, Aza-Higashihara, Konan-machi, Saitama (JP); Hasegawa, Hiroyuki, Aza-Higashihara, Konan-machi, Saitama (JP); Araki, Daisuke, Aza-Higashihara, Konan-machi, Saitama (JP)
(74) Representative: Kosmin, Gerald Emmanuel

(56) References cited:
- EP-A- 0 456 531
- DE-A- 3 624 747
- DE-A- 4 309 356
- DE-A- 19 540 020
- DE-A- 19 632 714
- FR-A- 2 660 254
- US-A- 4 767 153
- PATENT ABSTRACTS OF JAPAN vol. 010, no. 353 (M-539), 28 November 1986 & JP 61 150815 A (NIPPON DENSO CO LTD), 9 July 1986

## Description

The present invention relates to an air conditioning unit according to the preamble of claim 1 and known from FR-A-2660254, mounted in a vehicle and, in particular, in a vehicle without a hood such as a van, a delivery wagon or the like, which is provided in front of the steering beam and is structured to prevent damage to and deformation of the steering beam in the event of a collision.

JP-U-4-28105 (first example) discloses an air conditioning unit structured to be adopted in a vehicle in which it is positioned in front of a steering support member (steering beam) in the body and is provided with a means for movement that moves the air conditioning unit toward the lower portion of the body in the event of a collision. In more specific terms, if a collision occurs, the portion of the air conditioning unit that supports the upper rear portion of the vehicle becomes disengaged so that it is caused to artificially move downward or is caused to naturally fall downward, with the lower front portion of the vehicle air conditioning unit working as the fulcrum.

In addition, JP-U-4-104076 (second example), discloses a structure in which the steering beam is constituted of a sheet metal member and a knife-edge portion is provided in close proximity to and facing opposite the rear surface of an air conditioning unit case provided in front of the steering beam. The publication of the second example also discloses that a vulnerable portion constituted of a reduced thickness portion or the like is provided in the vicinity of the rear surface which faces opposite the knife-edge portion in close proximity.

Moreover, JP-A-8-192639 (third example) discloses a structure provided with an energy absorbing portion that absorbs collision energy through deformation by forming a notched portion at the front portion of an electric car so that it bends in an upward projection as compression deformation occurs when a compression load is applied and an energy absorbing portion that absorbs collision energy through deformation is provided. In addition, the publication of the third example discloses that an energy absorbing portion is also provided at a storage case for the fuel cell by forming a notched portion and a groove.

However, the first example presents problems in the event of a collision in that when the collision speed is high, the speed at which the air conditioning system drops may not be high enough with respect to the collision speed and in that the air conditioning system itself may not be fully secured in place. In addition, the second example presents a problem in that the structure of the steering beam is special and there is a problem with the third example in that the strength of the car body itself is reduced.

Accordingly, an object of the present invention is to provide an air conditioning unit having a structure that prevents, with a high degree of reliability, deformation of and damage to the steering beam caused by the air conditioning unit in the event of a collision.
In order to achieve the object described above, in the air conditioning unit according to the present invention, which is mounted in front of the steering beam in the body of the vehicle, comprises an air conditioner case that defines a roughly U-shaped airflow path, an air intake portion located at the upstream side of the airflow path, in which an air blower is provided, an upper outlet portion located to the rear of the air intake portion in the direction in which the vehicle advances and positioned at a downstream side of the airflow path, a means for temperature control provided in the airflow path downstream of the air intake portion, a lower outlet portion located in the vicinity of and downstream of the means for temperature control and positioned at another downstream side of the airflow path and an outlet mode door that selectively opens the upper outlet portion and the lower outlet portion, a stress concentrating structure that lowers the dynamic strength of the air conditioning unit in the direction of impact occurring in the event of a collision relative to the deformation load of the steering beam is provided in a portion of the air conditioning unit that is located within the range over which the steering beam is projected relative to the direction of impact, and the air intake portion is positioned lower than the range over which the steering beam is projected.

Thus, according to the present invention, since the stress concentrating structure that lowers the dynamic strength of the air conditioning unit relative to the deformation load of the steering beam is formed in a portion of the air conditioning unit that is located within the range over which the steering beam is projected and the air intake portion where the air blower is provided is positioned lower than the range over which the steering beam is projected, the air conditioning unit is destroyed before the deformation of the steering beam occurs. At the same time, since the air intake portion where the air blower is provided, which has a high degree of dynamic strength, is not within the range over which the steering beam is projected, the air conditioning unit can be destroyed at a load which is smaller than the deformation load of the steering beam. Consequently, deformation of and damage to the steering beam can be prevented.

In addition, according to the present invention, the upper outlet portion is provided with at least one opening that opens upward and a flange portion around the opening. The stress concentrating structure is constituted of at least one cut portion formed on a side constituting the flange portion along the direction of impact. With this, the stress imparted to the side of the flange portion which is formed to improve the strength of the opening of the upper outlet portion along the direction of impact at the time of a collision is concentrated in the cut portion to induce damage to the upper outlet portion first, thereby preventing deformation of and damage to the steering beam.

Furthermore, the side on which at least one cut portion is formed as described above may be formed in an arch that distends in a direction vertical to the direction of impact. This will concentrate the stress occurring during a collision in the cut portion with a high degree of efficiency.
The stress concentrating structure may be preferably constituted of a groove formed at a side surface of the upper outlet portion along the direction of impact, since this will cause the side surface to break easily so that the upper outlet portion becomes deformed easily. Alternatively, the stress concentrating structure may be constituted of a pair of ribs that are formed at a side surface of the upper outlet portion along the direction of impact instead. This will cause the stress to concentrate between the pair of ribs readily so that the side surface becomes deformed easily.

Moreover, the air conditioner case may be constituted of a pair of case assembly parts each having a bonding portion along the airflow path with the stress concentrating structure constituted of a notched portion formed in a part of the bonding portion of the case assembly parts that constitute the upper outlet portion. Since the ribs cause the bonding portions constituting the upper outlet portion to break easily, deformation of or damage to the upper outlet portion can be induced early.

In addition, it is desirable that ribs be formed along the individual bonding portions of parts constituting the upper outlet portion. With this, the stress occurring at the time of a collision can be concentrated with a high degree of reliability in the notched portions formed at the bonding portions.

The following is an explanation of the preferred embodiments of the present invention in reference to the drawings.

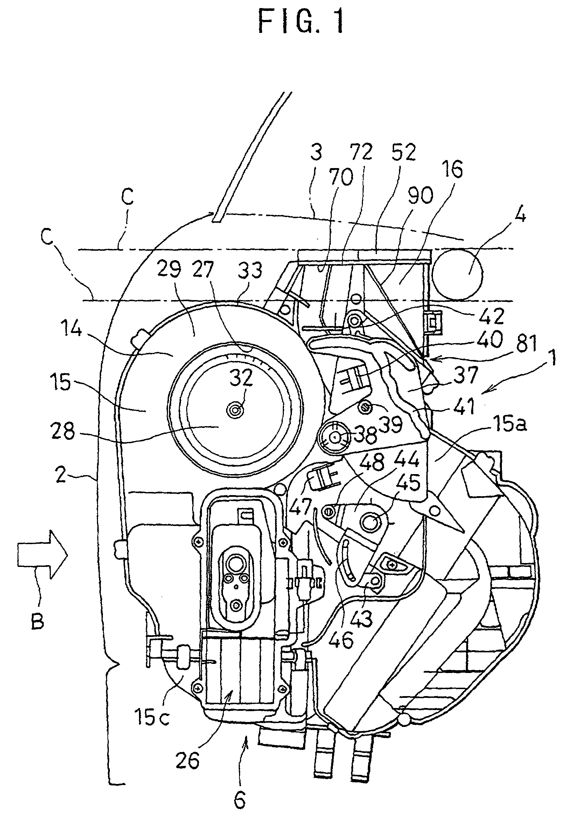

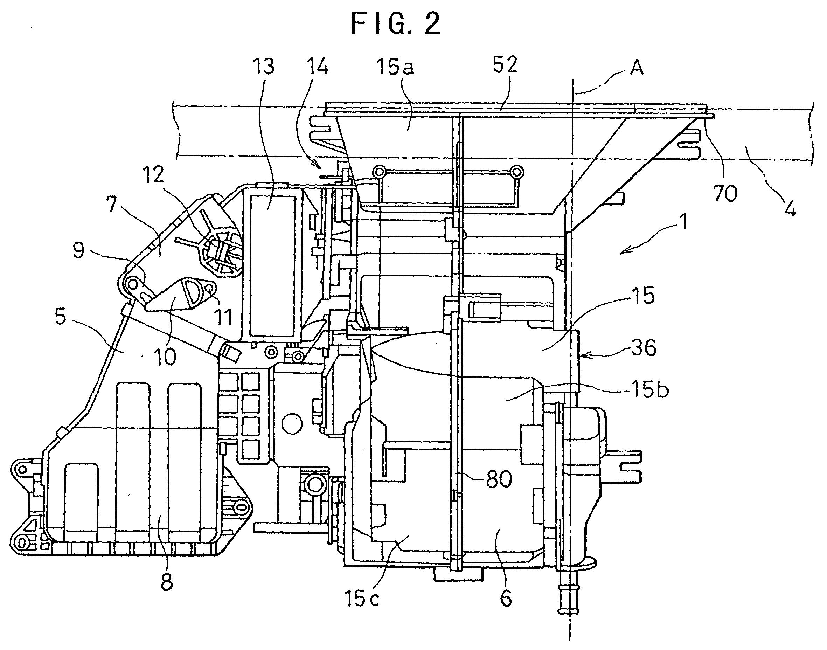

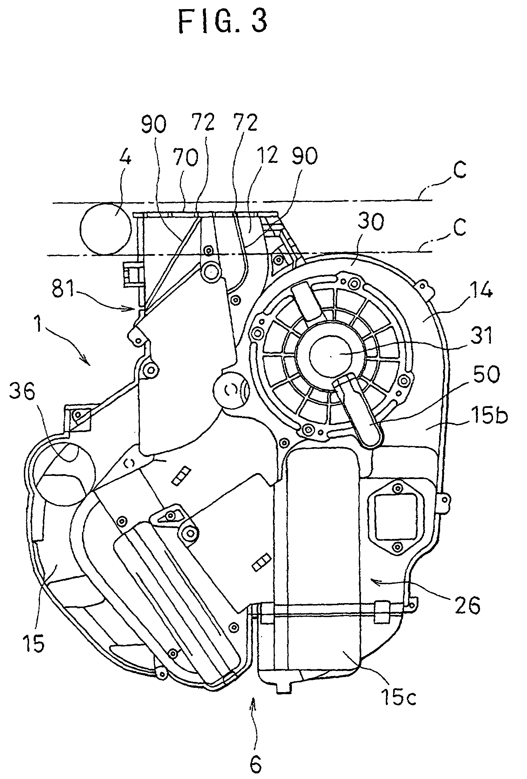

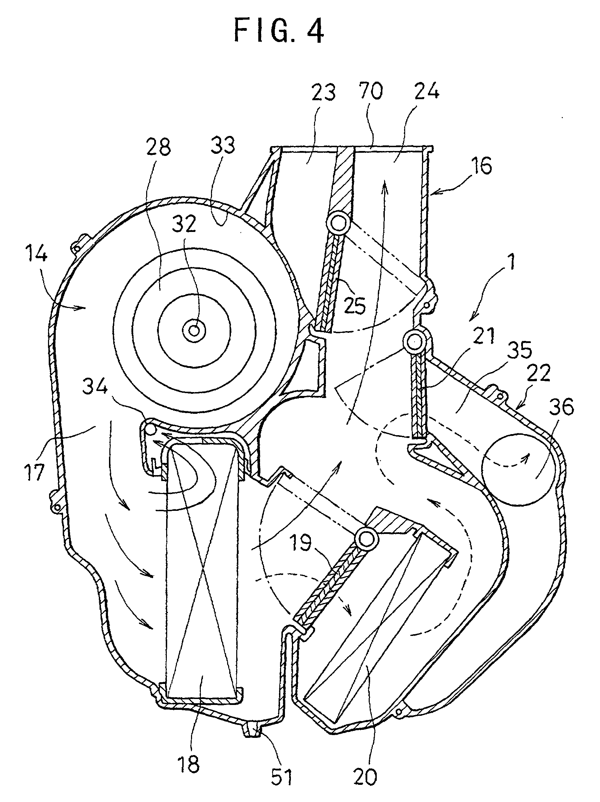

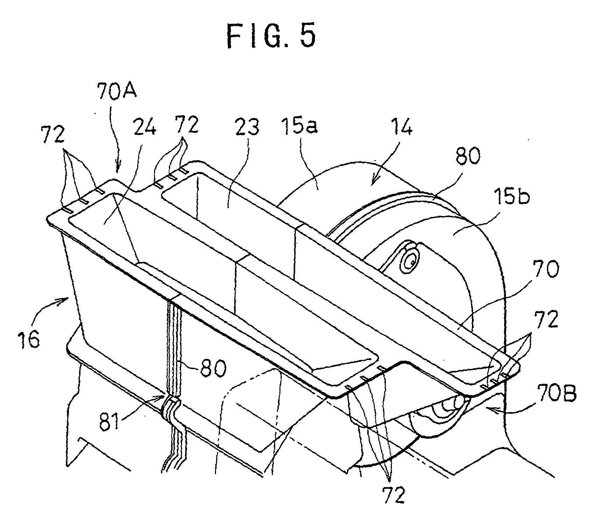

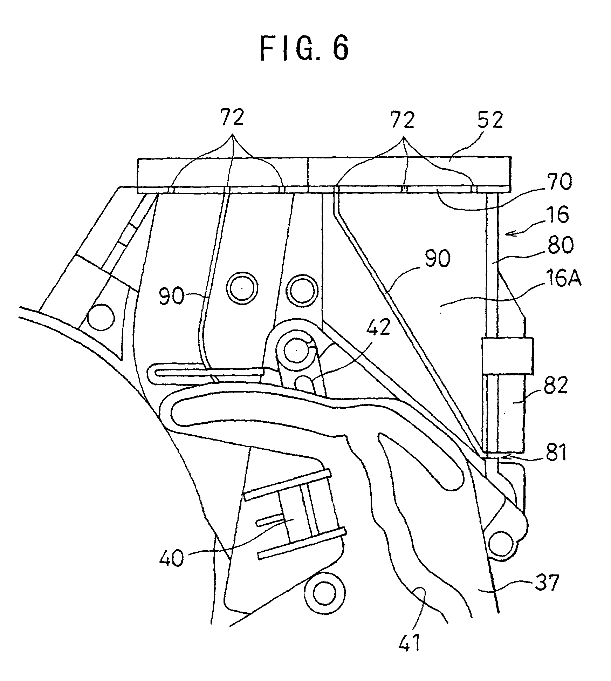

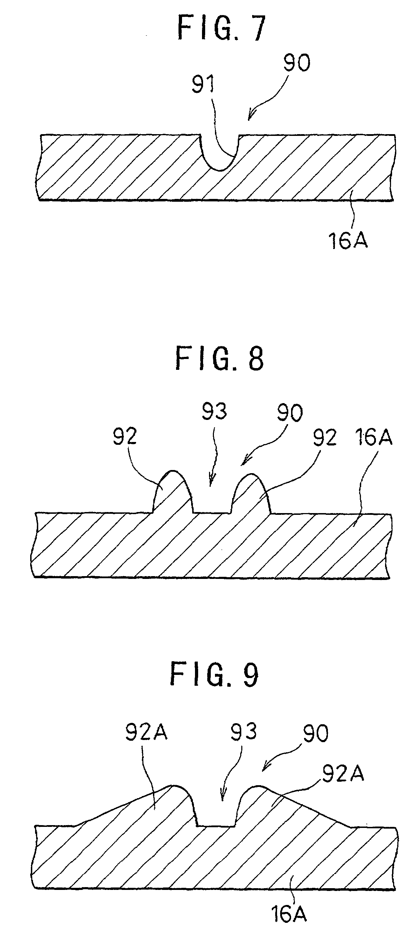

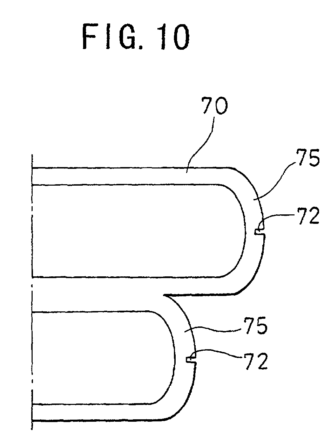

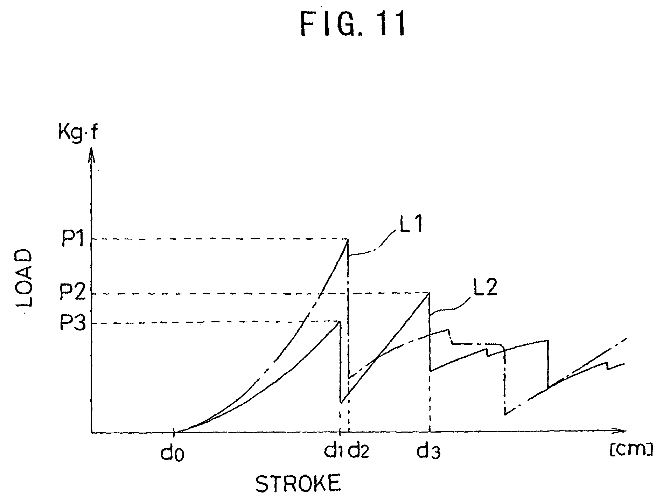

FIG. 1 is a side elevation schematically illustrating a side surface of the air conditioning unit in an embodiment of the present invention in a mounted state; FIG. 2 is a front view of the air conditioning unit above, schematically illustrating the front of the unit viewed from the inside of the vehicle cabin; FIG. 3 is a side view of the air conditioning unit above, schematically illustrating the other side surface; FIG. 4 is a cross section illustrating the internal structure of the air conditioning unit above; FIG. 5 is a perspective illustrating the vicinity of the upper outlet portion of the air conditioning unit above in a partial enlargement; FIG. 6 is a side elevation illustrating the vicinity of the upper outlet portion of the air conditioning unit in another embodiment in a partial enlargement; FIG. 7 is a cross section illustrating a first embodiment of the stress concentrating groove in a partial enlargement; FIG. 8 is a cross section illustrating a second embodiment of the stress concentrating groove in a partial enlargement; FIG. 9 is a cross section illustrating a third embodiment of the stress concentrating groove in a partial enlargement; FIG. 10 is a plan view illustrating another embodiment of the flange portion at the upper outlet portion in a partial enlargement; and FIG. 11 is a characteristics diagram presenting the test results that indicate the relationship between the range of movement of the steering beam 4 and the load in an air conditioning unit without a stress concentrating structure and in an air conditioning unit provided with a stress concentrating structure.

An air conditioning unit 1 illustrated in FIGS. 1 through 4, which is designed to achieve a high degree of compactness so that it can be installed in a vehicle and, in particular, in a vehicle without a hood such as a van, a delivery wagon or the like, is provided between a front panel 2 of the vehicle and a steering beam 4 at a car body which is provided vertically to the direction in which the vehicle advances, and within an instrument panel 3, i.e., between the central line A of the vehicle in FIG. 2 and the front passenger seat.

As is clearly illustrated in FIG. 2, the air conditioning unit 1 comprises an intake unit 5 and a temperature control unit 6. In this embodiment, the intake unit 5 is provided with an internal air induction portion 7 and an external air induction portion 8, with an intake door (not shown) that selectively opens the internal air induction portion 7 and the external air induction portion 8 as necessary provided between them. It is to be noted that in FIG. 2, reference number 9 indicates an arm which is linked to the intake door, reference number 10 indicates a drive arm for moving the arm 9 and reference number 11 is a terminal at which a wire cable wired to move the drive arm from the outside is secured. In addition, reference number 12 indicates a fixing terminal for fixing the wire cable.

In addition, a filter mounting portion 13 is provided at the intake unit 5 in this embodiment so that an electric dust collector, a filter or the like can be mounted internally. Furthermore, the intake unit 5 is mounted and secured at an air intake portion 14 of the temperature control unit 6.

As illustrated in FIGS. 1 through 4, the temperature control unit 6 is constituted of an air conditioner case comprising, at least, three case members (a first case member, a second case member and a third case member) 15a, 15b and 15c, the air intake portion 14 provided in the upper portion of the air conditioner case 15, an upper outlet portion 16 provided parallel to the air intake portion 14, an airflow path 17 that is formed in a roughly U-shape within the air conditioner case 15 and communicates between the air intake portion 14 and the upper outlet portion 16, an evaporator 18 that is provided on the airflow path 17 and under the air intake portion 14 and functions as a heat exchanger for cooling, a heater core 20 that is provided toward the downstream side relative to the evaporator 18 and functions as a heat exchanger for heating, an air mix door 19 that divides air which has passed through the evaporator 18 into air to flow toward the beater core 20 and air to bypass the heater core 20 and adjusts their quantities and a lower outlet portion 22 that is provided toward the downstream side relative to the air mix door 19 and the heater core 20.

The air conditioner case 15, which is constituted of the first and second case members 15a and 15b that constitute two large partitioned areas along the airflow path 17 extending from the air intake portion 14 to the upper outlet portion 16 and the third case member 15c that constitutes the lower portion of a mounting portion 26 of the evaporator 18, is formed by placing bonding flanges 80 formed at the bonding surfaces of the individual case members in contact with each other and securing them together by using screws, clips or the like. It is to be noted that a drain port 51 for releasing drain water generated at the evaporator 18 is formed at the third case member 15c.

In the air intake portion 14, which is constituted of an air intake port 27 formed at a side surface 29 to which the intake unit 5 is connected, a multivane fan, i.e., a so-called scirocco fan 28 having an intake side toward the air intake port 27, a motor 31 that is mounted at a side surface 30 facing opposite the side surface 29 to drive the scirocco fan 28, a large diameter portion 33 whose diameter gradually increases toward the direction in which the scirocco fan 28 rotates on a rotating shaft 32 of the scirocco fan 28 at the center and a tongue portion 34 located at the point of origin of the large diameter portion 33, the air taken in from the side at which the intake unit 5 is present through the rotation of the scirocco fan 28 is discharged along the large diameter portion 33 to flow into the airflow path 17.

In addition, on the airflow path 17 under the air inflow portion 14, a means for temperature control constituted of the evaporator 18, the air mix door 19 and the heater core 20 is provided. The lower outlet portion 22 provided toward the downstream side relative to the means for temperature control is constituted of a first mode door 21 that opens / closes a passage 35 in the lower outlet portion 22 and restricts the downstream side of the airflow path 17 and a lower outlet port 36 that communicates with the passage 35 and opens in a direction vertical to the passage 35. It is to be noted that the air mix door 19 is caused to rotate by the drive arm 43 linked to the air mix door 19, which is moved by a drive cam 44, and that reference number 45 indicates the drive fulcrum of the drive cam 44, reference number 46 indicates a cam groove, reference number 47 indicates a wire cable fixing terminal and reference number 48 indicates a fixing terminal for the wire cable.

The upper outlet portion 16 is provided with two outlet ports (a defrost outlet port and a vent outlet port) 23 and 24 opening in the upper portion of the air conditioning unit 1, and a second mode door 25 that selectively opens these two outlet ports 23 and 24 as necessary. In addition, the first and second mode doors 21 and 25 are driven, with a drive arm, (e.g., 42) which interlocks with a cam groove 41 formed at a drive cam 37 illustrated in FIG. 1 that is caused to move by the drive cam 37 rotating with a fulcrum portion 38 as the fulcrum and the drive cam 37 driven by the wire cable fixed to the wire cable fixing terminal 39. It is to be noted that reference number 52 in FIG. 1 indicates an insulator provided at flange portions 70 extending out at the circumferential edges of the outlet ports 23 and 24.

In the air conditioning unit 1 structured as described above, as the scirocco fan 28 rotates, external air or internal air is taken in through the intake unit scirocco 5, is discharged from the scirocco an 28 to travel along the large diameter portion 33 to reach the airflow path 17 and is cooled at the evaporator 18. The air that has been cooled while passing through the evaporator 18 is divided into air to pass through the heater core 20 and air to bypass the heater core 20 at the air mix door 19, the separate flows of air are mixed at the downstream side relative to the air mix door and the heater core 20 to become air at a desired temperature to be let out into the vehicle cabin via the outlet port 23, 24 or 36 selected by the first and second mode doors 21 and 25.

In addition, a portion of the air that passes through the evaporator 18 travels through a passage formed by notching out a part of an insulator provided at the upper portion of the evaporator 18 to reach the space inside the tongue portion 34, travels from the space to the motor 31 via a pipe 50 and cools the motor 31.

Furthermore, the range over which the steering beam 4 is projected relative to the direction B of impact to which the air conditioning unit 1 is subject in the event of a collision is the range enclosed by a pair of one point chain lines (projection lines) C in FIGS. 1 and 3, and in the air conditioning unit 1 according to the present invention, the air intake portion 14 provided with the scirocco fan 28 and the like, which has a high degree of strength against deformation, formed at a position lower than the lower projection line C so that the air intake portion 14 is outside the projection range. Thus, since the air intake portion 14 having a high degree of strength against deformation along the direction of impact (the direction indicated by the arrow B in FIG. 1) at the time of a collision is outside the projection range, the air intake portion 14 is prevented from colliding with the steering beam 4 to reduce the likelihood of the steering beam 4 becoming deformed or damaged.

In addition, since the upper outlet portion 16 which must extend out within the range over which the steering beam 4 is projected (hereafter referred to as the projection range) is expected to collide with the steering beam 4 in the event of a vehicle collision, it is necessary that the upper outlet portion 60 become deformed or destroyed at a load that is smaller than the deformation load of the steering beam 4. Thus, a stress concentrating structure which causes collision stress to concentrate at a specific position of the upper outlet portion 16 is formed at the upper outlet portion to ensure that the deformation or destruction of the upper outlet portion 16 in the direction of impact occurs at a minimum possible load relative to the deformation load of the steering beam 4.

A first constituent of the stress concentrating structure is at least one cut portion 72 formed at both lateral side 70A and lateral side 70B of the flange portion 70 of the upper outlet portion 16 located within the projection range along the direction of impact as illustrated in FIGS. 5 and 6, and in this embodiment, six cut portions 72 are formed at each lateral side. Thus, with the cut portions 72 formed at the lateral sides 70A and 70B of the flange portion 70 that improves the strength of the upper outlet portion 16 along the direction of impact, the stress occurring upon impact of the steering beam 4 can be concentrated at the cut portions 72 to lower the strength of the flange portion 70 in the direction impact.

In addition, the flange portion 70 may have arched lateral sides 75, as illustrated in FIG. 10 to concentrate stress at the cut portions 72. Since this causes the flange portions 70 to be broken off starting from the cut portion 72 by an impact, the strength of the upper outlet portion 16 in the direction of impact can be reduced.

Furthermore, a second constituent of the stress concentrating structure is at least one stress concentrating groove 90 which is formed at the two side surfaces 16A of the upper outlet portion 16 along the direction of impact, as illustrated in FIG. 6. Since the two side surfaces 16A extend along the direction of impact, the strength of the upper outlet portion 16 in the direction of impact is increased. Thus, in order to reduce the strength of the two side surfaces 16A in the direction of impact, the stress concentrating grooves 90 are formed at the two side surfaces 16A. A first embodiment of the stress concentrating grooves 90, which is illustrated in FIG. 7, is achieved by notching a groove 91 having a specific depth. Thus, when the steering beam 4 collides with the upper outlet portion 16, the two side surfaces 16A either become bent outward or become broken at the stress concentrating grooves 90, with the area where the stress concentrating groove 90 is formed forming the boundary. Consequently, the stress occurring in the event of a collision can be concentrated in a stress concentrating groove so that the impact can be absorbed at the upper outlet portion 16 before the steering beam 4 becomes damaged.

In addition, in a second embodiment of the stress concentrating groove 90 illustrated in FIG. 8, the stress concentrating groove 90 is formed by raising ribs at the two sides of the stress concentration portion 93. Since this causes impact imparted to the side surface 16A to concentrate between the ribs 92 where the strength is improved, the side surface 16A becomes either bent outward or broken off with the stress concentration portion 93 forming the boundary so that the impact can be absorbed by the upper outlet portion 16 before the steering beam 4 is damaged. While the damage load is higher in the second embodiment compared to that in the first embodiment, an advantage is obtained in that the strength of the upper outlet portion itself under normal circumstances can be maintained at the same level as in the prior art.

Furthermore, in a third embodiment of the stress concentrating groove 90 illustrated in FIG. 9, the strength of ribs 92A raised at the two sides of the stress concentration portion 93, and in particular, the strength of the side surfaces located on the opposite sides from the stress concentration portion 93, is further improved to ensure that stress is concentrated at the stress concentration portion 93 with a high degree of reliability. More specifically, the side surfaces of the ribs 92A on the opposite sides from the stress concentration portion 93 are made to gently incline so that the thickness of the side surface 16A located on the two sides of the stress concentration portion 93 can be assured over a specific range.

In addition, a third constituent of the stress concentrating structure is a notched portion 81 formed at a portion of a bonding flange 80, i.e., at the area located under the upper outlet portion 16, as illustrated in FIGS. 5 and 6. Since this causes the force of the impact imparted to the bonding flange 80 to concentrate at the notched portion 81, the strength of the upper outlet portion 16 can be reduced.

Furthermore, in order to achieve a structure in which stress is concentrated at the notched portion 81, a reinforcement rib 82 is raised in an area located higher than the notched portion 81 of the bonding flange 80 as illustrated in FIG. 6. Since this results in the force of an impact to the bonding flange 80 concentrating at the notched portion 81 to an even greater degree, the strength of the upper outlet portion 16 is further reduced.

Moreover, by constituting the stress concentrating groove 90 by connecting one of the cut portions 72 and the notched portion 81, the stress concentrating groove 90, the cut portion 72 and the notched portion 81 achieve an integrated structure to lower the strength of the upper outlet portion 16 in the direction of impact.

With the air conditioning unit 1 structured as described above, the maximum load can be reduced to approximately 70% (P2/P1) of the maximum load of an air conditioning unit that is not provided with a stress concentrating structure, as illustrated in FIG. 11. It is to be noted that the characteristics curves in FIG. 12 represent the results of tests that indicate the relationship between the stroke of the steering beam 4 and the load imparted to the air conditioning unit, with L1 representing the characteristics achieved by an air conditioning unit that is not provided with a stress concentrating structure and L2 representing the characteristics achieved by the air conditioning unit 1 according to the present invention.

In addition, in this figure, since the air conditioning unit that is not provided with a stress concentrating structure is destroyed to a great degree all at once, the load at the first destruction is large, whereas in the case of the air conditioning unit according to the present invention, the first destruction occurs at approximately 60% (P3/P1) of the maximum load on the air conditioning unit not having a stress concentrating structure and even the load at the second destruction, which constitutes the maximum load, is approximately 70% (P2/P1), demonstrating that it is reduced compared to that in the air conditioning unit without a stress concentrating structure. As a result, the load at the time of destruction can be greatly reduced to prevent deformation of the steering beam.

As has been explained, according to the present invention, in which only the upper outlet portion of the air conditioning unit is provided within the range over which the steering beam is projected relative to the direction of impact occurring in the event of a collision and the stress concentrating structure for lowering the strength in the direction of impact is provided at the upper outlet portion, the upper outlet portion of the air conditioning unit can be caused to become deformed or broken off before deformation of the steering beam occurs, to prevent deformation of the steering beam. Thus, since problems that are expected to occur as a result of deformation of the steering beam, such as the direction in which the air bag mounted at the steering beam opens becoming offset and / or the steering beam moving close to the passenger to increase the degree of impact on the passenger, can be prevented or minimized, which, in turn, further improves the safety of the vehicle.

While the presently preferred embodiments of the present invention have been shown and described, it is to be understood that these disclosures are for the purpose of illustration and that various changes and modifications may be made without departing from the scope of the present invention as set forth in the appended claims.

## Claims

1. An air conditioning unit (1) provided in front of a steering beam (4) of a vehicle in a car body comprising:
an air conditioner case defining a roughly U-shaped airflow path (17);
an air intake portion (14) located at an upstream side of said airflow path (17), which is provided with an air blower (28);
an upper outlet portion (16) provided rearward of said air intake portion (14) in the direction in which said vehicle advances and positioned at a downstream side of said airflow path (17);
a means for temperature control (18, 20) provided in said airflow path (17) under said air intake portion (14);
a lower outlet portion provided near said means for temperature control (18, 20) toward a downstream side and is positioned at another downstream side of said airflow path (17); and
an outlet mode door (21) selectively opening said upper outlet portion and said lower outlet portion, **characterized in that**
a stress concentrating structure lowering the dynamic strength of said air conditioning unit in a direction of impact (B) relative to a deformation load of said steering beam (4) is provided at a portion of said air conditioning unit located within a range (C) over which said steering beam (4) is projected relative to said direction of impact (B) occurring as a result of a collision; and
said air intake portion (14) is positioned lower than said range (C) over which said steering beam (4) is projected toward the car body front (2).

2. The air conditioning unit (1) according to claim 1, wherein:
said upper outlet portion (16) is provided with at least one opening (23, 24) which opens upward and a flange portion (70) around said opening (23, 24); and
said stress concentrating structure is constituted of at least one cut portion (72) formed at a side constituting said flange portion (70) along said direction of impact.

3. The air conditioning unit according to claim 2, wherein:
said side at which at least one cut (72) portion is provided, is formed in an arch distending in a direction vertical to said direction of impact (B).

4. The air conditioning unit according to claim 1, 2 or 3, wherein:
said stress concentrating structure (90) is constituted of a groove portion (91) formed at a side surface (16A) of said upper outlet portion (16) along said direction of impact (B).

5. The air conditioning unit according to claim 1, 2 or 3, wherein:
said stress concentrating structure (90) is constituted of a pair of ribs (92) formed at a side surface (16A) of said upper outlet portion (16) along said direction of impact (B).

6. The air conditioning unit according to any one of preceding claims, wherein:
said air conditioner case is constituted of a pair of case assembly parts each having a bonding portion (80) along said airflow path (17) and said stress concentrating structure is constituted of a notched portion (81) formed in a part of said bonding portions (80) of said case assembly parts constituting said upper outlet portion (16).

7. The air conditioning unit according to claim 6, wherein:
ribs (82) are formed at individual bonding portions (80) located at areas constituting said upper outlet portion (16) along said individual bonding portions (80).

## Patentansprüche

1. Klimaanlage (1), die vor einer Lenksäule (4) eines Fahrzeugs in einer Karosserie angeordnet ist, aufweisend:
- ein Klimaanlagengehäuse, das einen in etwa U-förmigen Luftströmungskanal (17) bildet,
- ein an einer stromaufwärtigen Seite des Luftströmungskanals (17) angeordnetes Luft-Einlassteil (14), das mit einem Lüftungsgebläse (28) versehen ist,
- ein oberes Auslassteil (16), das hinter dem Luft-Einlassteil (14) in der Richtung, in der sich das Fahrzeug bewegt, angeordnet ist, und sich auf einer stromabwärtigen Seite des Luftströmungskanals (17) befindet,
- einen Temperaturregler (18,20), der in dem Luftströmungskanal (17) unter dem Luft-Einlassteil (14) angeordnet ist,
- ein unteres Auslassteil, das nahe des Temperaturreglers (18,20) in Richtung auf einer stromabwärtigen Seite angeordnet ist und sich an einer weiteren stromabwärtigen Seite des Luftströmungskanals (17) befindet, und
- eine Auslassmodus-Klappe (21), die wahlweise das obere Auslassteil und das untere Auslassteil öffnet,
**dadurch gekennzeichnet, dass**
- eine Vorrichtung zum Konzentrieren der Beanspruchung, die die dynamische Festigkeit der Klimaanlage in einer Aufprallrichtung (B) relativ zu einer Verformungsbelastung der Lenksäule (4) verringert, in einem Abschnitt der Klimaanlage vorgesehen ist, der sich innerhalb eines Bereichs (C) befindet, in dem sich die Lenksäule (4) relativ zur Richtung (B) eines Aufpralls, der infolge einer Kollision auftritt, erstreckt, und
- das Luft-Einlassteil (14) tiefer als der Bereich (C), in dem sich die Lenksäule (4) zur Karosserievorderseite (2) hin erstreckt, angeordnet ist.

2. Klimaanlage (1) nach Anspruch 1, bei der
das obere Auslassteil (16) mit wenigstens einer Öffnung (23,24), die sich nach oben hin öffnet, und einem Flanschteil (70) um die Öffnung (23,24) herum versehen ist, und
die Vorrichtung zum Konzentrieren der Beanspruchung aus wenigstens einem Einschnitt (72) besteht, der an einer Seite, die das Flanschteil (70) entlang der Aufprallrichtung bildet, gebildet ist.

3. Klimaanlage nach Anspruch 2, bei der
die Seite, an der wenigstens ein Einschnitt (72) vorgesehen ist, als ein Bogen ausgebildet ist, der sich in einer Richtung vertikal zur Aufprallrichtung (B) erstreckt.

4. Klimaanlage nach Anspruch 1, 2 oder 3, bei der
die Vorrichtung (90) zum Konzentrieren der Beanspruchung eine Nut (91) ist, die-an einer Seitenfläche (16A) des oberen Auslassteils (16) entlang der Aufprallrichtung (B) ausgebildet ist.

5. Klimaanlage nach Anspruch 1, 2, oder 3, bei der
die Vorrichtung (90) zum Konzentrieren der Beanspruchung ein Rippenpaar (92) ist, das an einer Seitenfläche (16A) des oberen Auslassteils (16) entlang der Aufprallrichtung (B) ausgebildet ist.

6. Klimaanlage nach einen der vorhergehenden Ansprüche, bei der
das Klimaanlagengehäuse von zwei Gehäuseteilen gebildet ist, die jeweils einen Verbindungsabschnitt (80) entlang des Luftströmungskanals (17) haben, und die Vorrichtung zum Konzentrieren der Beanspruchung aus einem eingekerbten Abschnitt (81) besteht, der in einem Teil des Verbindungsabschnitts (80) der Gehäuseteile, aus denen das obere Auslassteil (16) besteht, gebildet ist.

7. Klimaanlage nach Anspruch 6, bei der
Rippen (82) an einzelnen Verbindungsabschnitten (80) ausgebildet sind, die sich in Bereichen befinden, die das obere Auslassteil (16) entlang der einzelnen Verbindungsabschnitte (80) bilden.

## Revendications

1. Unité de climatisation (1) prévue devant un arbre de direction (4) d'un véhicule, dans une carrosserie, comprenant :
- une enveloppe d'appareil de climatisation qui définit une trajectoire d'air (17) approximativement en U ;
- une partie d'admission d'air (14) située en amont de la trajectoire d'air (17) et pourvue d'un ventilateur (28) ;
- une partie de sortie supérieure (16) située en arrière de la partie d'admission d'air, dans le sens de déplacement du véhicule, et en aval de la trajectoire d'air (17) ;
- des moyens de contrôle de la température (18, 20) disposés dans la trajectoire d'air (17), sous la partie d'admission d'air (14) ;
- une partie de sortie inférieure située près des moyens de contrôle de la température (18, 20), vers un côté aval, et sur un autre côté aval de la trajectoire d'air (17) ; et
- un volet de sortie (21) qui ouvre sélectivement la partie de sortie supérieure et la partie de sortie inférieure,
**caractérisée**
- **en ce qu'**une structure de concentration de contrainte qui réduit la résistance dynamique de l'unité de climatisation dans un sens d'impact (B) par rapport à une charge de déformation de l'arbre de direction (4) est prévue sur une partie de ladite unité de climatisation qui est située sur une distance (C) sur laquelle l'arbre de direction (4) dépasse par rapport au sens d'impact (B) résultant d'une collision ; et
- la partie d'admission d'air (14) se trouve plus bas que la distance (C) sur laquelle l'arbre de direction (4) dépasse vers l'avant de la carrosserie (2).

2. Unité de climatisation (1) selon la revendication 1, dans laquelle :
la partie de sortie supérieure (16) est pourvue d'au moins une ouverture (23, 24) qui s'ouvre vers le haut, et d'une partie formant rebord (70) prévue autour de ladite ouverture (23, 24) ; et
la structure de concentration de contrainte se compose d'au moins une partie découpée (72) prévue sur un côté qui définit ladite partie formant rebord (70) dans le sens d'impact.

3. Unité de climatisation selon la revendication 2, dans laquelle :
le côté sur lequel est prévue au moins une partie découpée (72) a une forme arquée qui s'étend dans un sens vertical par rapport au sens d'impact (B).

4. Unité de climatisation selon la revendication 1, 2 ou 3, dans laquelle :
la structure de concentration de contrainte (90) se compose d'une partie rainurée (91) formée sur une surface latérale (16A) de la partie de sortie supérieure (16) dans le sens d'impact (B).

5. Unité de climatisation selon la revendication 1, 2 ou 3, dans laquelle :
la structure de concentration de contrainte (90) se compose de deux nervures (92) formées sur une surface latérale (16A) de la partie de sortie supérieure (16) dans le sens d'impact (B).

6. Unité de climatisation selon l'une quelconque des revendications précédentes, dans laquelle :
l'enveloppe d'appareil de climatisation se compose de deux éléments d'ensemble d'enveloppe présentant chacun une partie de liaison (80) dans le sens de la trajectoire d'air (17), et la structure de concentration de contrainte se compose d'une partie entaillée (81) formée dans une zone des parties de liaison (80) des éléments d'ensemble d'enveloppe qui définit la partie de sortie supérieure (16).

7. Unité de climatisation selon la revendication 6, dans laquelle :
des nervures (82) sont formées sur les parties de liaison individuelles (80) situées au niveau de zones qui définissent la partie de sortie supérieure (16) le long desdites parties de liaison individuelles (80).
